# FASCICULE DE BREVET EUROPEEN

(11) **EP 2 199 132 B1**
(45) Date de publication et mention de la délivrance du brevet: **05.06.2013**
(21) Numéro de dépôt: 09306293.3
(22) Date de dépôt: 21.12.2009
(51) Int. Cl.: B60Q 3/06, B60R 11/00, B60J 7/20, B60L 8/00

(54) **Pièce d'équipement intérieur de véhicule automobile munie de cellules photovoltaïques**
Auto-Innenausstattungsteil mit Solarzellen
Interior vehicle fitting having solar cells

(30) Priorité: 19.12.2008 FR 0807311
(43) Date de publication de la demande: 23.06.2010
(73) Titulaire: Faurecia Automotive Industrie, 92000 Nanterre (FR)
(72) Inventeur: Bilien, Christelle, 08200, SEDAN (FR); Decorme, Jacques, 08090, MONTCY NOTRE DAME (FR); Jeunehomme, Franck, 08800, MONTHERME (FR); Curien, Jean-Yves, 67220, BASSEMBERG (FR); Laime, Sébastien, 08090, BELVAL (FR)
(74) Mandataire: Blot, Philippe Robert Emile

(56) Documents cités:
- DE-A1- 19 734 816
- FR-A- 2 889 132
- FR-A- 2 906 772
- GB-A- 1 273 460
- JP-A- 7 290 951
- JP-A- 8 238 988
- JP-A- 62 251 230
- JP-U- 62 112 801

## Description

La présente invention concerne une pièce d'équipement intérieur de véhicule automobile, selon le préambule de la revendication 1.

Il est connu, pour alimenter électriquement divers appareils électriques présents dans l'habitacle du véhicule, de prévoir une prise dite « allume-cigare » intégrée dans la planche de bord du véhicule. Cette prise est reliée électriquement à la batterie et/ou à l'alternateur du véhicule.

Si la prise est située à l'arrière du véhicule, il est nécessaire de faire cheminer des fils électriques jusqu'à l'arrière du véhicule, ce qui est coûteux et encombrant.

Lorsque l'appareil électrique est monté sur une pièce mobile dans l'habitacle du véhicule, par exemple une tablette, il est coûteux et compliqué techniquement de raccorder électriquement la pièce mobile à la batterie et/ou à l'alternateur du véhicule.

Il est également connu d'éclairer le coffre d'un véhicule au moyen d'une lampe fixe ou amovible. Celle-ci est généralement intégrée dans les garnitures latérales de coffre et est reliée au système électrique du véhicule via un réseau de câble. L'inconvénient de cette solution est que l'éclaireur ne fonctionne pas si le système électrique du véhicule est défaillant.

Le brevet US 4 974 129 déposé par la société Black & Decker décrit un système d'éclairage amovible fonctionnant à l'énergie solaire, fixé sur le rétroviseur intérieur d'un véhicule automobile au moyen d'une bride ajustable et s'allumant et s'éteignant manuellement. L'inconvénient de ce système est que le panneau solaire est intégré dans le boîtier ce qui alourdit l'éclaireur et augmente les risques d'endommagement de celui-ci lorsque l'éclaireur est manipulé.

JP 07 290 951 décrit un pare soleil sur lequel est rapporté un miroir muni de panneaux solaires. JP 62-112 801 décrit une planche de bord munie de panneaux solaires.

Un but de l'invention est donc de fournir une pièce d'équipement intérieur de véhicule automobile, embarquée dans le véhicule, autonome électriquement, permettant une alimentation électrique de divers appareils électriques et simple à mettre en oeuvre.

A cet effet, l'invention a pour objet une pièce selon la revendication 1.

Suivant des modes particuliers de réalisation, la pièce selon l'invention comporte l'une ou plusieurs des caractéristiques des revendications 2 à 11.

L'invention sera mieux comprise à la lecture de la description qui va suivre, donnée uniquement à titre d'exemple, et faite en se référant aux dessins annexés, sur lesquels :
- la figure 1 est une vue schématique en perspective de dessus d'une tablette arrière d'un coffre d'un véhicule automobile, selon l'invention ;
- la figure 2 est une vue en perspective de dessous de la tablette de la figure 1 ;
- la figure 3 est une vue schématique en coupe longitudinale suivant le plan III de la Figure 1 d'un dispositif d'éclairage prévu sur la tablette selon l'invention ;
- la figure 4 est une vue schématique en coupe transversale du dispositif d'éclairage de la figure 3 lorsque la tablette est rabattue ;
- la figure 5 est une vue analogue à la figure 4, dans laquelle la tablette est levée, lors de l'ouverture du coffre ;
- la figure 6 est une vue analogue aux figures 4 et 5 dans une configuration où la lampe du dispositif d'éclairage a été décrochée de son socle d'alimentation.
- la figure 7 est une vue analogue à la figure 4 d'une tablette comprenant un socle avec deux prises électriques;
- la figure 8 est une vue analogue aux figures 4 et 7, le dispositif d'éclairage comprenant des cellules photovoltaïques d'alimentation électrique éloignées spatialement du socle d'alimentation de la lampe ;
- la figure 9 est une vue schématique en perspective de dessus d'un hayon de coffre d'un véhicule automobile selon l'invention ; et
- la figure 10 est une vue détaillée du dispositif d'éclairage de la figure 7, sur laquelle la lampe a été sortie, de son logement sur le socle.

Dans tout ce qui suit, les orientations sont les orientations habituelles d'un véhicule automobile. Ainsi, les termes « supérieur », « inférieur », « avant », «arrière », s'entendent par rapport au sens normal de circulation du véhicule et à la position d'un conducteur.

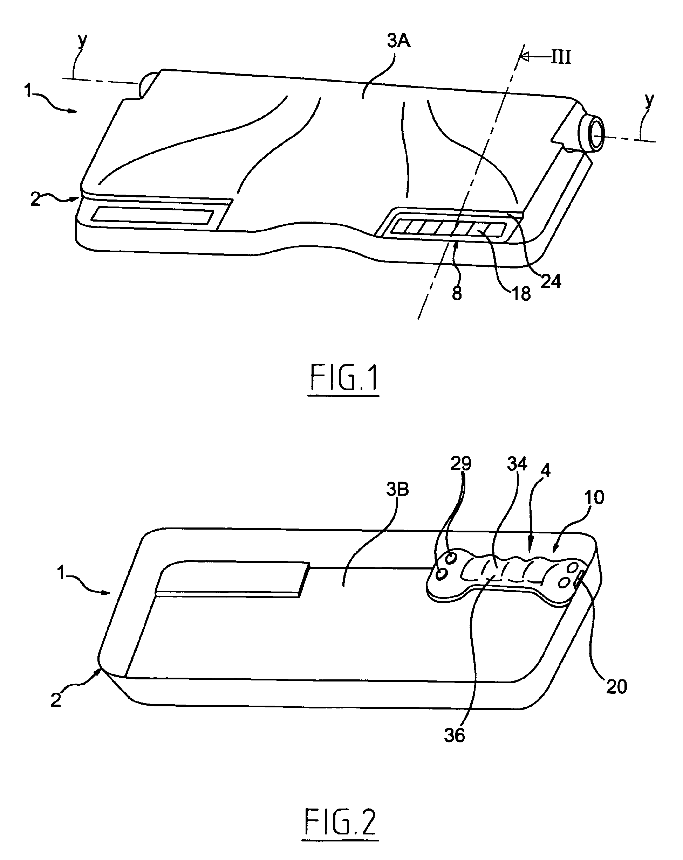

Les figures 1 à 10 illustrent une pièce 1 d'équipement intérieur de véhicule automobile selon l'invention. Cette pièce 1 comprend un corps formant une tablette 2 arrière de coffre d'un véhicule automobile.

De manière connue, le coffre est un espace de chargement d'objets délimité latéralement par des flancs latéraux du véhicule. Il est délimité à l'avant par les sièges arrière du véhicule et à l'arrière par un hayon mobile entre une position fermée et une position ouverte d'accès au coffre.

La tablette arrière 2 est articulée autour d'un axe transversal Y-Y entre les flancs latéraux (non représentés) du véhicule à l'écart du plancher et du plafond du véhicule. Elle délimite une surface supérieure 3A d'aspect destinée à être visible depuis l'extérieur du véhicule lorsque le hayon est fermé, et une surface inférieure 3B masquée depuis l'extérieur du véhicule lorsque le hayon est fermé.

La surface supérieure 3A peut être destinée au support d'objets.

Dans cet exemple, la tablette 2 se lève avec le hayon en pivotant vers le haut autour de l'axe Y-Y, lorsque le hayon passe de sa position fermée à sa position ouverte d'accès au coffre.

La pièce 1 comporte en outre, comme visible sur les figures 1 et 2, un dispositif d'éclairage 4 intégré à la tablette 2.

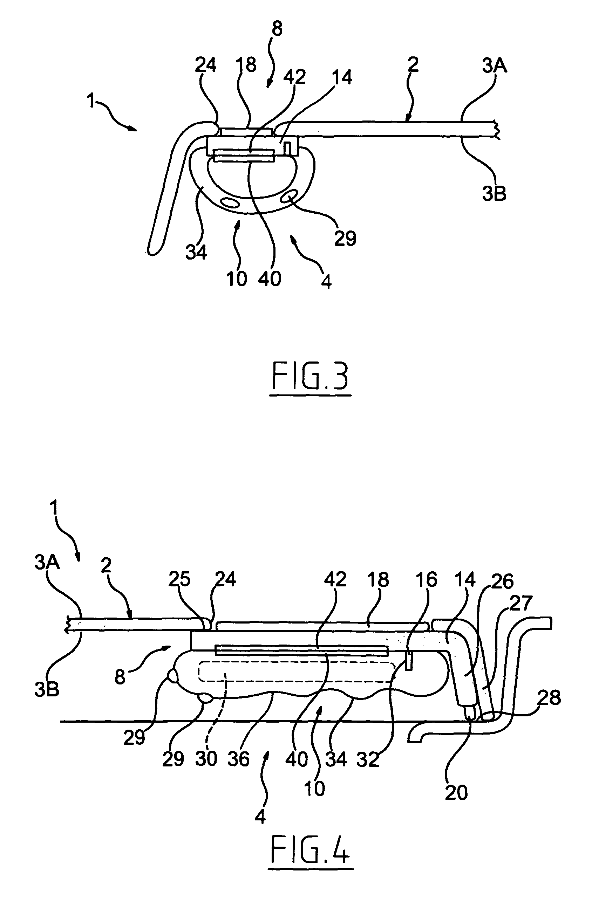

Ce dispositif d'éclairage 4 comprend une station 8 fixe d'alimentation électrique et un appareil électrique formé d'une lampe 10 amovible représentée en détails sur les figures 3 à 6, l'appareil électrique étant alimenté électriquement par la station 8.

La station d'alimentation 8 est montée à demeure sur le corps formant tablette 2. Elle se déplace ainsi conjointement avec la tablette 2 lors de son pivotement vers le haut.

La station 8 comprend un socle 14 rapporté sous la surface inférieure 3B de la tablette, par tout moyen adapté de fixation, par exemple par encliquetage, soudage, collage, etc...

Le socle 14 comporte une prise électrique 16 de connection à la lampe 10, au moins une cellule photovoltaïque 18 d'alimentation électrique, et un interrupteur 20.

Le socle 14 a une forme générale épousant la forme de la tablette 2.

Le socle 14 est disposé sous la tablette 2, au niveau d'une fenêtre 24 ménagée à travers la tablette entre les surfaces 3A et 3B, et situé en regard de la ou des cellules photovoltaïques 18. La ou les cellules 18 sont ainsi propres à être exposées à travers la fenêtre 24 à une source lumineuse extérieure au véhicule, comme par exemple le soleil ou une lumière artificielle.

Le socle 14 est disposé sous la tablette 2 de façon à être caché depuis l'extérieur du véhicule au moins temporairement dans la position fermée du hayon.

Le socle 14 comprend une plaque 25 d'appui sous la tablette, sur le pourtour de la fenêtre 24, et un rebord 26, épousant la forme du bord tombé (c'est-à-dire le rebord d'extrémité incliné) latéral 27 de la tablette 2.

Le rebord 26 du socle 14 est légèrement en retrait vers l'intérieur par rapport au bord tombé 27 de la tablette 2. Le bord tombé 27 de la tablette 2 est disposé en appui sur une custode 28 délimitée par les flancs latéraux du véhicule lorsque la tablette 2 est rabattue dans une position horizontale, lors de la fermeture du hayon.

La prise 16 est située sur la surface inférieure du socle 14. Elle comprend au moins un connecteur mâle en saillie vers le bas par rapport au socle 14.

La ou les cellules photovoltaïques 18 sont reliées électriquement à la prise 16 pour alimenter électriquement cette dernière lorsque la ou les cellules 18 sont exposées à une lumière naturelle ou artificielle extérieure au véhicule.

L'interrupteur 20 est un poussoir mobile faisant saillie vers le bas par rapport au rebord 26 du socle 14 et au bord tombé 27 de la tablette 2, lorsque le bord tombé 27 de la tablette est à l'écart de la custode 28 dans la position d'accès au coffre. Lors de la fermeture du hayon, le poussoir 20 est enfoncé par appui sur la custode 28.

Comme on le verra plus bas, l'interrupteur 20 est relié électriquement à la lampe 10 pour couper l'éclairage fourni par la lampe 10 exclusivement lorsque le poussoir est enfoncé.

La lampe 10 comprend au moins une source de lumière 29, par exemple une ampoule ou de manière préférée une diode électroluminescente désignée ci-après par l'acronyme anglais LED, un accumulateur 30 relié électriquement à la ou aux sources de lumière 29, et une prise 32 complémentaire de la prise électrique 16 de la station 8.

La prise complémentaire 32 est reliée électriquement à l'accumulateur 30 pour permettre l'alimentation et la charge de ce dernier par la ou les cellules photovoltaïques 18, lorsque les prises 16 et 32 sont connectées. La prise complémentaire 32 comprend un ou des organes femelles destinés à recevoir le ou les organes mâles de la prise 16.

La lampe 10 comprend un boîtier 34 sur lequel est montée la prise électrique 32 et à l'intérieur duquel sont prévus l'accumulateur 30 et les LED 29. Les LED 29 sont avantageusement disposées aux extrémités longitudinales du boîtier 34.

Le boîtier 34 est léger, compact et il a une forme ergonomique. N'importe quel utilisateur le tient facilement dans sa main. Il présente avantageusement une ou des zones antidérapantes sur sa surface. Son poids est de préférence inférieur ou égal à 200g, de préférence encore inférieur ou égal à 100g, par exemple environ égal à 50g. La longueur du boîtier est de préférence inférieure ou égale à 200mm, par exemple environ égale à 130mm, sa largeur est de préférence inférieure ou égale à 200mm, par exemple environ égale à 40mm, et son épaisseur est de préférence inférieure ou égale à 50mm, par exemple environ égale à 30mm. De manière préférée, le boîtier 34 comporte, comme représenté sur la figure 2, une pluralité d'évidements 36 de réception des doigts de l'utilisateur.

Le boîtier 34 est fixé de façon amovible sur la face inférieure du socle 14 par encliquetage, coulissement ou tout autre moyen. De manière préférée, le boîtier 34 est muni d'une plaque aimantée 40 de fixation amovible sur une plaque aimantée 42 fixée sur la face inférieure du socle 14. En variante, néanmoins seule une des plaques est aimantée, et l'autre est ferromagnétique.

Dans une variante non illustrée, la lampe 10 comprend un moyen de fixation supplémentaire permettant d'accrocher ou de fixer temporairement la lampe 10 sur un support autre que le socle 14. Cet autre support peut être une vitre, la tôle du véhicule, une poignée etc. Le moyen de fixation supplémentaire peut être une ventouse, un aimant, un crochet, une pince etc. Il permet d'accrocher la lampe n'importe où et libère ainsi les mains de l'utilisateur.

La lampe 10 est montée mobile entre une position raccordée électriquement à la station 8 et une position déconnectée de la station 8.

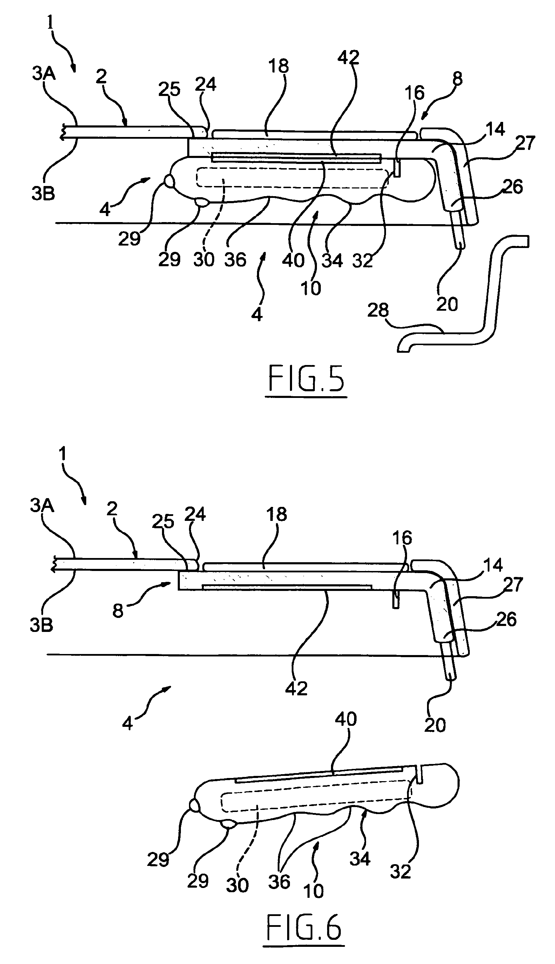

Dans la position raccordée électriquement, représentée sur les figures 4 et 5, la lampe 10 est plaquée sous le socle 14 en regard de la surface inférieure 3B de la tablette 2. Les prises 16 et 32 sont raccordées électriquement l'une à l'autre.

Dans la position déconnectée, représentée sur la figure 6, la lampe 10 a été déplacée à l'écart du socle 14 et de la tablette 2. Les prises 16 et 32 ont été déconnectées.

La lampe 10 est munie d'une unité électronique de commande (non représentée) arrêtant l'alimentation des sources de lumière 29 par l'accumulateur exclusivement lorsque les prises 16 et 32 sont connectées et lorsque l'interrupteur 20 est enfoncé, et assurant l'alimentation des sources de lumière 29 lorsque l'une de ces deux conditions n'est pas remplie.

Les figures 4 à 6 illustrent le dispositif d'éclairage dans différentes configurations.

Sur la figure 4, la tablette 2 est rabattue dans sa position horizontale et le hayon est fermé. La tablette 2 est disposée en appui sur les custodes 28 et l'interrupteur 20 est enfoncé par une des custodes 28.

Les sources de lumière 29 de la lampe 10 sont alors inactives. L'accumulateur 30 est raccordé électriquement à la ou aux cellules 18 pour permettre son chargement si les cellules 18 sont exposées à une lumière naturelle ou artificielle extérieure au véhicule.

Lors de l'ouverture du hayon représentée sur la figure 5, la tablette 2, qui est par exemple reliée par des cordons au hayon, se lève. L'interrupteur 20 est libéré et l'accumulateur 30 alimente alors les sources de lumière 29 de la lampe 10 pour les activer.

La lampe 10 éclaire alors le coffre et notamment l'espace situé sous la surface inférieure 3B de la tablette 2, et cela jusqu'à ce que le hayon soit refermé ou que l'accumulateur soit déchargé.

Cet éclairage est obtenu de manière autonome, sans qu'il soit nécessaire d'amener jusqu'à la tablette 2 du courant électrique provenant de la batterie ou de l'alternateur situés dans le compartiment moteur du véhicule. Ainsi l'éclairage fonctionne même si le circuit électrique du véhicule est défaillant et il utilise de l'énergie renouvelable.

Lorsque le hayon est ouvert, la tablette 2 levée et que l'accumulateur 30 est raccordé électriquement aux cellules 18, ce dernier peut se charger si les cellules 18 sont exposées à une lumière naturelle ou artificielle extérieure au véhicule.

En référence à la figure 6, si l'utilisateur manipule et déplace la lampe 10 pour éclairer une autre partie du véhicule ou tout autre espace ou lieu, la lampe 10 est retirée du socle 14. L'utilisateur peut, par exemple, utiliser la lampe pour changer une roue, lire une carte, ouvrir le capot moteur, signaler sa présence ou pour tout autre usage.

Les prises 16 et 32 sont alors déconnectées et l'accumulateur 30 alimente les sources de lumière 29 en continu, sans possibilité pour l'utilisateur d'éteindre la lampe 10.

La lampe 10 fonctionnant en continu lorsqu'elle est retirée du socle 14, l'utilisateur est incité à la remettre en place sur celui-ci pour l'éteindre. Ainsi le risque de perdre la lampe 10 est réduit et la fonction d'éclairage de coffre est assurée.

Avec l'invention, un deuxième appareil électrique distinct de la lampe 10 peut être raccordé électriquement à la prise 16 lorsque la lampe 10 est déconnectée de la station 8. Lorsque le deuxième appareil est raccordé électriquement aux cellules photovoltaïques 18 et que celles-ci sont exposées à une lumière naturelle ou artificielle extérieure au véhicule, le deuxième appareil est alimenté électriquement et / ou l'accumulateur compris dans cet appareil est rechargé.

En outre, la station 8 est autonome électriquement et peut de ce fait être facilement intégrée à des éléments amovibles, tels qu'une tablette arrière 2 de véhicule automobile.

La lampe 10 est solide car elle est dépourvue des cellules photovoltaïques 18 qui sont fragiles.

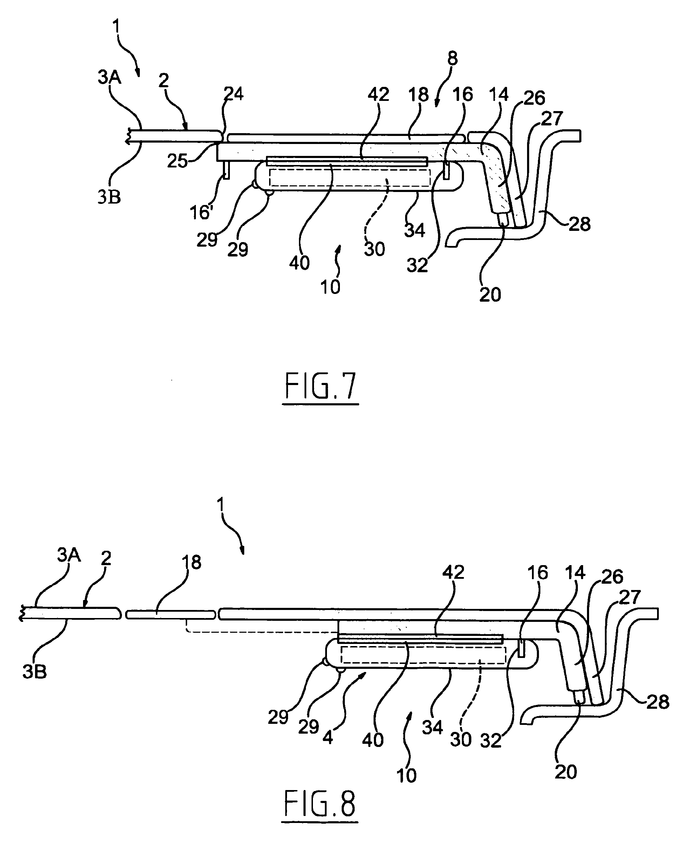

Dans une variante représentée sur la figure 7 dans laquelle seules les différences par rapport au premier mode de réalisation sont décrites ci-dessous, la station 8 comprend au moins une prise auxiliaire 16' de connexion d'un deuxième appareil électrique. Celle-ci est distincte de la prise 16 et est raccordée électriquement aux cellules photovoltaïques 18. La station d'alimentation électrique 8 permet d'alimenter électriquement simultanément deux appareils électriques ou plus lorsque les cellules photovoltaïques 18 sont exposées à une lumière naturelle ou artificielle extérieure au véhicule.

Dans une autre variante représentée sur la figure 8, dans laquelle seules les différences par rapport au premier mode de réalisation sont décrites ci-dessous, la ou les cellules photovoltaïques 18 et le socle 14 sont distants spatialement sur la tablette 2. Le socle 14 n'est pas situé en regard de la ou des cellules photovoltaïques 18. La ou les cellules photovoltaïques 18 sont reliées électriquement à la prise 16 pour alimenter électriquement cette dernière lorsque les cellules photovoltaïques 18 sont exposées à une lumière naturelle ou artificielle extérieure au véhicule.

Dans une variante non représentée dans laquelle seules les différences par rapport au premier mode de réalisation seront décrites ci-dessous, la tablette arrière 2 est dépourvue de cordons la reliant au hayon. Dans un premier mode de cette variante, l'interrupteur 20 est prévu pour offrir un contact direct avec le hayon lorsque celui-ci est fermé. Ainsi lorsque le hayon se soulève l'interrupteur est libéré et l'accumulateur 30 alimente alors électriquement les sources de lumière 29 de la lampe 10. Dans un second mode de cette variante, l'interrupteur 20 est en appui sur la custode 28 et une action de soulèvement de la tablette par l'utilisateur libère l'interrupteur ce qui permet à l'accumulateur 30 d'alimenter électriquement les sources de lumière 29 de la lampe 10.

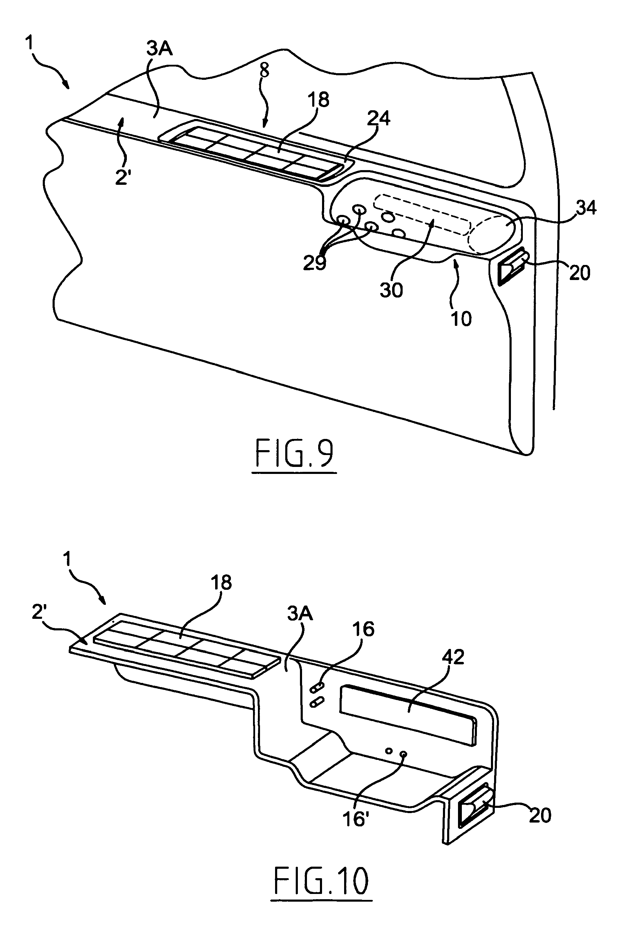

Dans une variante représentée sur les figures 9 et 10, dans laquelle seules les différences par rapport au premier mode de réalisation seront décrites ci-dessous, la pièce 1 diffère essentiellement en ce qu'elle comprend un corps formant un hayon 2' de coffre de véhicule automobile, dans lequel est intégré le dispositif d'éclairage 4. La ou les cellules photovoltaïques 18 et l'appareil électrique formé d'une lampe 10 sont adjacents sur la surface d'aspect inférieur 3A du hayon 2'. L'interrupteur 20 est un poussoir mobile faisant saillie sur le montant latéral du hayon 2'. Lorsque le hayon 2' est fermé, le poussoir 20 est enfoncé par appui sur la carrosserie. Lorsque le hayon 2' se soulève, l'interrupteur est libéré et l'accumulateur 30 alimente alors électriquement les sources de lumière 29 de la lampe 10.

Les variantes du premier mode de réalisation sont applicables à cette variante des figures 9 et 10.

Un dispositif d'éclairage intégré dans un hayon 2' permet d'obtenir un champ d'éclairage plus large que lorsqu'il est intégré dans une tablette. Un dispositif d'éclairage intégré dans une tablette éclaire principalement le coffre, notamment l'avant du coffre, et un dispositif d'éclairage intégré dans un hayon éclaire principalement le sol en arrière du coffre (zone de chargement) et l'arrière du coffre. La combinaison de deux dispositifs d'éclairage, un dans le hayon et un dans la tablette, permet d'optimiser l'éclairage du coffre et de la zone de chargement.

Dans une variante non représentée, l'unité électronique de commande intégrée dans la lampe 10 combinée avec le poussoir 20, est remplacée par un interrupteur "marche-arrêt" classique. Le coût de réalisation d'une telle lampe est moins élevé. Dans ce cas, l'utilisateur allume ou éteint la lampe 10 manuellement.

Dans une variante non représentée, le dispositif d'éclairage est intégré dans un appui-tête de siège de véhicule automobile. La ou les cellules photovoltaïques 18 et l'appareil électrique formé d'une lampe 10 sont adjacents sur la surface d'aspect de l'appui-tête. Avantageusement, la lampe 10 est munie d'un interrupteur "marche-arrêt" qui permet de l'allumer ou de l'éteindre manuellement.

Dans une variante non représentée, l'appareil électrique 10 peut être monté à demeure sur le corps 2 ou 2'. Dans ce cas, l'appareil électrique est fixe, non amovible.

Dans d'autres variantes, les stations d'alimentation 8 peuvent être prévues sur différents composants d'habillage intérieur du véhicule automobile. Le corps 2 forme alors un élément intérieur du véhicule choisi parmi une custode, un panneau de porte, une planche de bord, un siège.

Dans une variante dans laquelle le corps est une tablette arrière de coffre, le corps est mobile entre une position horizontale dans laquelle la source de lumière est dirigée vers le bas pour éclairer le coffre et une position soulevée dans laquelle la source de lumière est orientée vers l'arrière pour éclairer la zone de chargement située à l'arrière du coffre, et du véhicule à l'extérieur de celui-ci.

Suivant un mode de réalisation qui ne fait pas partie de l'invention, la pièce est une pièce 1 d'équipement intérieur de véhicule automobile, destinée à être placée dans l'habitacle d'un véhicule automobile, du type comprenant :
- un corps 2 formant une surface d'aspect 3A de la pièce 1, le corps 2 comprenant une station 8 d'alimentation électrique, le corps formant une tablette arrière de véhicule automobile, et
- au moins un appareil électrique 10 destiné à être fixé sur le corps 2 pour être raccordé électriquement à la station d'alimentation électrique 8.
- la station d'alimentation électrique 8 ne comprend pas nécessairement au moins une cellule photovoltaïque 18 montée à demeure sur le corps 2 pour former au moins partiellement la surface d'aspect 3A de la pièce 1, la ou les cellules photovoltaïques 18 étant propre à alimenter électriquement le ou les appareils électriques 10 lorsque ceux-ci sont raccordés électriquement à la station d'alimentation électrique 8. Une batterie peut être utilisée pour alimenter l'appareil électrique.

## Revendications

1. Pièce (1) d'équipement intérieur de véhicule automobile, destinée à être placée dans l'habitacle d'un véhicule automobile, du type comprenant :
- un corps (2) formant une surface d'aspect (3A) de la pièce (1), le corps (2) formant une tablette arrière de véhicule, **caractérisé en ce que** le corps (2) comprend une station (8) d'alimentation électrique, et
- au moins un appareil électrique (10) destiné à être fixé sur le corps (2) pour être raccordé électriquement à la station d'alimentation électrique (8),
et **en ce que** la station d'alimentation électrique (8) comprend au moins une cellule photovoltaïque (18) montée à demeure sur le corps (2) pour former au moins partiellement la surface d'aspect (3A) de la pièce (1), ladite station d'alimentation électrique (8) comprenant un socle (14) de réception de l'appareil électrique (10) rapporté sous le corps (2), chaque cellule photovoltaïque (18) étant portée par ledit socle (14) et étant propre à alimenter électriquement au moins un appareil électrique (10) lorsque celui-ci est raccordé électriquement à la station d'alimentation électrique (8).

2. Pièce (1) selon la revendication 1, **caractérisée en ce que** la surface d'aspect (3A) est destinée à être illuminée par une source de lumière extérieure au véhicule lorsque la pièce (1) est placée dans le véhicule automobile.

3. Pièce (1) selon la revendication 1 ou 2, **caractérisée en ce que** le ou les appareils électriques (10), lorsqu'ils sont raccordés électriquement à la station d'alimentation électrique (8), sont alimentés électriquement exclusivement par la ou les cellules photovoltaïques (18).

4. Pièce (1) selon l'une quelconque des revendications 1 à 3, **caractérisée en ce que** au moins un appareil électrique (10) est fixé à demeure sur le corps (2).

5. Pièce (1) selon l'une quelconque des revendications 1 à 3, **caractérisée en ce que** au moins un appareil électrique (10) est monté de manière amovible sur le corps (2) entre une position raccordée électriquement à la station d'alimentation électrique (8) et une position déconnectée de la station d'alimentation électrique (8) à l'écart du corps (2).

6. Pièce (1) selon l'une quelconque des revendications précédentes, **caractérisée en ce que** le socle (14) présente au moins un premier connecteur électrique (16), l'appareil électrique (10) présentant au moins un deuxième connecteur électrique (32) destiné à être raccordé au premier connecteur électrique (16) lorsque l'appareil électrique (10) est reçu sur le socle (14).

7. Pièce (1) selon l'une quelconque des revendications précédentes, **caractérisée en ce que** le socle (14) comprend plusieurs connecteurs électriques (16, 16') pour alimenter électriquement simultanément plusieurs appareils électriques lorsque les cellules photovoltaïques (18) sont exposées à une source de lumière extérieure au véhicule.

8. Pièce (1) selon l'une quelconque des revendications précédentes, **caractérisée en ce que** l'appareil électrique (10) comprend au moins une source de lumière (29) et un accumulateur (30) pour alimenter la ou les sources de lumière (29), l'accumulateur (30) étant destiné à être relié à la ou les cellules photovoltaïques (18) lorsque l'appareil électrique (10) est fixé sur le corps (2).

9. Pièce (1) selon la revendication 8, **caractérisée en ce que** le socle (14) de réception de l'appareil électrique (10) comprend un interrupteur (20) qui coupe l'alimentation électrique de la source de lumière (29) par l'accumulateur (30) dans au moins une position donnée d'un ouvrant du véhicule.

10. Pièce (1) selon l'une quelconque des revendications 8 ou 9, **caractérisée en ce que** le corps (2) est une tablette arrière de coffre, le corps étant destiné à être mobile entre une position horizontale dans laquelle la source de lumière (29) est propre à éclairer le coffre et une position soulevée par l'utilisateur dans laquelle la source de lumière est orientée vers l'arrière pour éclairer la zone de chargement située à l'arrière du véhicule.

11. Pièce (1) selon l'une quelconque des revendications précédentes, **caractérisée en ce que** l'appareil électrique (10) est un système d'éclairage, le système d'éclairage étant fixé sur la surface (3B) de la tablette opposée à la surface d'aspect (3A), ladite surface opposée (3B) étant destinée à être masquée au moins temporairement de la source de lumière extérieure au véhicule lorsque la tablette est placée dans le véhicule automobile.

## Patentansprüche

1. Innenausstattungsteil (1) für ein Kraftfahrzeug, das vorgesehen ist, um im Fahrgastraum eines Kraftfahrzeugs platziert zu werden, des Typs, der aufweist: ,
- einen Körper (2), der eine Erscheinungsbildfläche (3A) des Teils (1) bildet, wobei der Körper (2) eine Heckablage des Fahrzeugs bildet, **dadurch gekennzeichnet, dass** der Körper (2) eine Stromversorgungsstation (8) aufweist, und
- mindestens eine elektrische Vorrichtung (10), die vorgesehen ist, um an dem Körper (2) befestigt zu sein, um elektrisch mit der Stromversorgungsstation (8) verbunden zu werden,
und dass die elektrische Versorgungsstation (8) mindestens eine Photovoltaikzelle (18) aufweist, die feststehend an dem Körper (2) montiert ist, um zumindest teilweise die Erscheinungsbildfläche (3A) des Teils (1) zu bilden, wobei die Stromversorgungsstation (8) einen Sockel (14) zum Aufnehmen der elektrischen Vorrichtung (10) aufweist, der unter dem Körper (2) angefügt ist, wobei jede Photovoltaikzelle (18) von dem Sockel (14) getragen wird und geeignet ist, mindestens eine elektrische Vorrichtung (10) mit Strom zu versorgen, wenn diese elektrisch mit der Stromversorgungsstation (8) verbunden ist.

2. Teil (1) gemäß Anspruch 1, **dadurch gekennzeichnet, dass** die Erscheinungsbildfläche (3A) vorgesehen ist, um von einer sich außerhalb des Fahrzeugs befindenden Lichtquelle beleuchtet zu werden, wenn das Teil (1) in dem Kraftfahrzeug platziert ist.

3. Teil (1) gemäß Anspruch 1 oder 2, **dadurch gekennzeichnet, dass** die elektrische Vorrichtung (10) oder die elektrischen Vorrichtungen (10), wenn sie elektrisch mit der Stromversorgungsstation (10) verbunden ist/sind, ausschließlich von der oder den Photovoltaikzellen (18) gespeist wird/werden.

4. Teil (1) gemäß irgendeinem der Ansprüche 1 bis 3, **dadurch gekennzeichnet, dass** mindestens eine elektrische Vorrichtung (10) feststehend an dem Körper (2) befestigt ist.

5. Teil (1) gemäß irgendeinem der Ansprüche 1 bis 3, **dadurch gekennzeichnet, dass** mindestens eine elektrische Vorrichtung (10) zwischen einer elektrisch mit der Stromversorgungsstation (8) verbundenen Position und einer von der Stormversorgungsstation (8) gelösten Position im Abstand von dem Körper (2) lösbar an dem Körper (2) montiert ist.

6. Teil (1) gemäß irgendeinem der vorhergehenden Ansprüche, **dadurch gekennzeichnet, dass** der Sockel (14) mindestens eine erste elektrische Steckverbindung (16) aufweist, wobei die elektrische Vorrichtung (10) mindestens eine zweite elektrische Steckverbindung (32) aufweist, die vorgesehen ist, um mit der ersten elektrischen Steckverbindung (16) verbunden zu sein, wenn die elektrische Vorrichtung (10) an dem Sockel (14) aufgenommen ist.

7. Teil (1) gemäß irgendeinem der vorhergehenden Ansprüche, **dadurch gekennzeichnet, dass** der Sockel (14) mehrere elektrische Steckverbindungen (16, 16') aufweist, um gleichzeitig mehrere elektrische Vorrichtungen mit Strom zu versorgen, wenn die Photovoltaikzellen (18) einer Lichtquelle ausgesetzt sind, die sich außerhalb des Fahrzeugs befindet.

8. Teil (1) gemäß irgendeinem der vorhergehenden Ansprüche, **dadurch gekennzeichnet, dass** die elektrische Vorrichtung (10) mindestens eine Lichtquelle (29) und einen Akkumulator (30) zum Speisen der Lichtquelle oder Lichtquellen (29) aufweist, wobei der Akkumulator (30) vorgesehen ist, um mit der Photovoltaikzelle oder den Photovoltaikzellen (18) verbunden zu sein, wenn die elektrische Vorrichtung (10) an dem Körper (2) befestigt ist.

9. Teil (1) gemäß Anspruch 8, **dadurch gekennzeichnet, dass** der Sockel (14) zum Aufnehmen der elektrischen Vorrichtung (10) einen Schalter (20) aufweist, der die Stromversorgung der Lichtquelle (29) durch den Akkumulator (30) in mindestens einer gegebenen Position einer Tür des Fahrzeugs unterbricht.

10. Teil (1) gemäß irgendeinem der Ansprüche 8 oder 9, **dadurch gekennzeichnet, dass** der Körper (2) eine Hutablage ist, wobei der Körper vorgesehen ist, um zwischen einer horizontalen Position, in der die Lichtquelle (29) geeignet ist, den Kofferraum zu beleuchten, und einer durch den Benutzer angehobenen Position bewegbar zu sein, in der die Lichtquelle Richtung Heck ausgerichtet ist, um den Ladebereich zu beleuchten, der sich im Heck des Fahrzeugs befindet.

11. Teil (1) gemäß irgendeinem der vorhergehenden Ansprüche, **dadurch gekennzeichnet, dass** die elektrische Vorrichtung (10) ein Beleuchtungssystem ist, wobei das Beleuchtungssystem an der Fläche (3B) der Ablage entgegengesetzt zu der Erscheinungsfläche (3A) befestigt ist, wobei die entgegengesetzte Fläche (3B) vorgesehen ist, um zumindest vorübergehend vor der Lichtquelle verdeckt zu sein, die sich außerhalb des Fahrzeugs befindet, wenn die Ablage in dem Kraftfahrzeug montiert ist.

## Claims

1. Interior fitting (1) for an automotive vehicle designed to be placed in the passenger compartment of an automotive vehicle, comprising:
- a body (2) forming a visible surface (3A) of the fitting (1), the body (2) forming a vehicle rear shelf, **characterised in that** the body (2) has an electric power supply station (8), and
- at least one electrical apparatus (10) designed to be affixed to the body (2) in order to be electrically connected to the electric power supply station (8),
and **in that** the electric power supply station (8) has at least one solar cell (18) permanently mounted on the body (2) to at least partially form the visible surface (3A) of the fitting (1), said electric power supply station (8) having a detachable housing base (14) for the electrical apparatus (10) underneath the body (2), each solar cell (18) being supported by said base (14) and being designed to supply electric power to at least one electrical apparatus (10) when the latter is electrically connected to the electric power supply station (8).

2. Fitting (1) as claimed in claim 1, **characterised in that** the visible surface (3A) is designed to be illuminated by a light source outside the vehicle when the fitting (1) is placed in an automotive vehicle.

3. Fitting (1) as claimed in claim 1 or 2, **characterised in that** the electrical apparatus or apparatuses (10) are electrically powered exclusively by the solar cell or cells (18) when they are electrically connected to the electric power supply station (8).

4. Fitting (1) as claimed in any one of claims 1 to 3, **characterised in that** at least one electrical apparatus (10) is permanently affixed to the body (2).

5. Fitting (1) as claimed in any one of claims 1 to 3, **characterised in that** at least one electrical apparatus (10) is mounted on the body (2) so as to be displaceable on the body (2) between a position electrically connected to the electric power supply station (8) and a position disconnected from the electric power supply station (8) moved away from the body (2).

6. Fitting (1) as claimed in any one of the preceding claims, **characterised in that** the base (14) has at least a first electrical connector (16), the electrical apparatus (10) having at least a second electrical connector (32) designed to be connected to the first electrical connector (16) when the electrical apparatus (10) is housed on the base (14).

7. Fitting (1) as claimed in any one of the preceding claims, **characterised in that** the base (14) has several electrical connectors (16, 16') for supplying several electrical apparatuses simultaneously with electric power when the solar cells (18) are exposed to a light source outside the vehicle.

8. Fitting (1) as claimed in any one of the preceding claims, **characterised in that** the electrical apparatus (10) has at least one light source (29) and an accumulator (30) for supplying the light source or sources (29), the accumulator (30) being designed to be connected to the solar cell or cells (18) when the electrical apparatus (10) is affixed to the body (2).

9. Fitting (1) as claimed in claim 8, **characterised in that** the base (14) for housing the electrical apparatus (10) has a switch (20) which shuts off the electric power supply of the light source (29) from the accumulator (30) when an opening element of the vehicle is in at least one given position.

10. Fitting (1) as claimed in any one of preceding claims 8 or 9, **characterised in that** the body (2) is a rear boot shelf, the body being designed to be displaceable between a horizontal position in which the light source (29) is in a position to illuminate the boot and a position raised by the user in which the light source is oriented towards the rear in order to illuminate the loading zone disposed at the rear of the vehicle.

11. Fitting (1) as claimed in any one of the preceding claims, **characterised in that** the electrical apparatus (10) is a lighting system, the lighting system being affixed to the surface (3B) of the shelf opposing the visible surface (3A), said opposing surface (3B) being intended to be at least temporarily screened from the light source outside the vehicle when the shelf is placed in the automotive vehicle.
